(19) Europäisches Patentamt / European Patent Office / Office européen des brevets

(11) **EP 3 279 244 B1**

(12) **EUROPEAN PATENT SPECIFICATION**

(45) Date of publication and mention
of the grant of the patent:
**02.06.2021 Bulletin 2021/22**

(21) Application number: **16772582.9**

(22) Date of filing: **24.03.2016**

(51) Int Cl.:
***B29C 48/00*** (2019.01)

(86) International application number:
**PCT/JP2016/059487**

(87) International publication number:
**WO 2016/158701 (06.10.2016 Gazette 2016/40)**

(54) **CROSSLINKED POLYOLEFIN RESIN FOAM**

VERNETZTER POLYOLEFINHARZSCHAUMSTOFF

MOUSSE DE RÉSINE DE POLYOLÉFINE RÉTICULÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2015 JP 2015073817**

(43) Date of publication of application:
**07.02.2018 Bulletin 2018/06**

(73) Proprietor: **Sekisui Chemical Co., Ltd.**
**Osaka 530-8565 (JP)**

(72) Inventors:
• **UNO, Takumei**
**Hasuda-shi**
**Saitama 349-0101 (JP)**

• **MIKAMI, Hiroki**
**Hasuda-shi**
**Saitama 349-0101 (JP)**

(74) Representative: **Ter Meer Steinmeister & Partner**
**Patentanwälte mbB**
**Nymphenburger Straße 4**
**80335 München (DE)**

(56) References cited:
| | |
|---|---|
| EP-A1- 0 011 748 | EP-A1- 1 449 868 |
| EP-A1- 2 000 500 | JP-A- H10 219 016 |
| JP-A- H10 219 016 | JP-A- 2000 313 763 |
| JP-A- 2003 041 040 | JP-A- 2010 280 838 |
| JP-A- 2010 280 838 | JP-A- 2013 245 251 |
| JP-A- 2013 245 251 | US-A- 3 645 930 |

**Description**

Technical Field

The present invention relates to vehicle interior member obtained by further forming a cross-linked polyolefin resin foam.

Background Art

Conventionally, fabricated articles formed from cross-linked polyolefin resin foams have been widely used for vehicle interior members including a ceiling, a door, and an instrument panel. In manufacturing of cross-linked polyolefin resin foams, azodicarbonamide is generally used as foaming agent. After foaming, azodicarbonamide allows a minute amount of decomposition residue to remain in the resin. A portion of the decomposition residue is sublimable, causing fogging in some cases. Fogging is a phenomenon that results from a minute amount of sublimate generated from a resin material or resin foam for use as interior member, adhering to the inner surface of a windshield or the like to cause hazing.
In order to prevent fogging caused by azodicarbonamide, for example, PTL1 discloses that a basic magnesium compound and/or a basic calcium compound is blended in a resin together with azodicarbonamide.

Citation List

Patent Literature

PTL1: JP 3532791 B
EP 0 011 748 A1 relates to a process for the preparation of crosslinked foams based on polyolefins by peroxidic crosslinking and foaming by a chemical foaming agent under normal pressure conditions in the presence of certain magnesium compounds.
EP 2 000 500 A1 describes a polyolefin resin foam that can be used in a vehicle interior member, wherein the foaming is carried out with carbon dioxide.
JP 2013 245251 A relates to a thermoplastic foam that contains hydrothalcite.
JP 2010 280838 A relates to a resin foam composition comprising polyolefin, azodicarbonamide and magnesium oxide, wherein said composition/foam is used in an electric cable/wire.

Summary of Invention

Technical Problem

A polyolefin resin foam is continuously produced using an extruder in some cases. In the production using an extruder, stagnated materials caused by resin deterioration are often accumulated inside the extruder. The stagnated materials mixed into a foam composition causes foam rupture in the vicinity of the stagnated materials, generating huge cells in some cases. The generation of such huge cells tends to occur, in particular, when a basic magnesium compound, a basic calcium compound, or the like is blended therein as in PTL1. A resin foam having huge cells is difficult to use for vehicle interior members due to the poor appearance.
It is an object of the present invention, in view of these circumstances, to provide a polyolefin resin foam capable of appropriately preventing the generation of fogging, with the generation of huge cells resulting from foam rupture being suppressed, even when the foam is manufactured using an extruder or the like.

Solution to Problem

Through extensive investigation, the present inventors found that use of a specified amount of specified basic magnesium having a small particle diameter can prevent the generation of fogging caused by azodicarbonamide, with the generation of huge cells being suppressed, thus accomplishing the present invention described below.

(1) A vehicle interior member obtained by further forming a cross-linked polyolefin resin foam,
the cross-linked polyolefin resin foam obtained by cross-linking and foaming a polyolefin resin composition,
the composition comprising a polyolefin resin-containing resin (A), azodicarbonamide (B), and at least one basic magnesium (C) selected from the group consisting of magnesium oxide and magnesium hydroxide,
wherein the amount of the basic magnesium (C) included in the polyolefin resin composition is 0.05 to 0.5 parts by mass relative to 100 parts by mass of the resin (A), and

the basic magnesium (C) has an average particle diameter of 0.1 to 15 $\mu$m.

(2) The vehicle interior member according to the above (1), wherein the amount of the azodicarbonamide (B) included in the polyolefin resin composition is 3 to 12 parts by mass relative to 100 parts by mass of the resin (A).

(3) The vehicle interior member according to the above (1) or (2), wherein the resin (A) comprises 50 mass% or more of a polypropylene resin as the polyolefin resin.

(4) The vehicle interior member according to the above (3), wherein the resin (A) further comprises 1 to 50 mass% of a polyethylene resin as the polyolefin resin.

(5) The vehicle interior member foam according to any one of the above (1) to (4), wherein the foam has a density of 0.02 to 0.20 g/cm$^3$.

(6) A method of manufacturing a vehicle interior member comprising:

extruding a polyolefin resin composition comprising a polyolefin resin-containing resin (A), azodicarbonamide (B), and at least one basic magnesium (C) selected from the group consisting of magnesium oxide and magnesium hydroxide with an extruder;

cross-linking and foaming the extruded polyolefin resin composition so as to obtain a cross-linked polyolefin resin foam, and

forming the cross-linked polyolefin resin foam to the vehicle interior member,

wherein the amount of the basic magnesium (C) included in the polyolefin resin composition is 0.05 to 0.5 parts by mass relative to 100 parts by mass of the resin (A), and

the basic magnesium (C) has an average particle diameter of 0.1 to 15 $\mu$m.

(7) Use of a cross-linked polyolefin resin foam in a vehicle interior member, comprising forming the cross-linked polyolefin resin foam to the vehicle interior member,

the cross-linked polyolefin resin foam obtained by cross-linking and foaming a polyolefin resin composition,

the composition comprising a polyolefin resin-containing resin (A), azodicarbonamide (B), and at least one basic magnesium (C) selected from the group consisting of magnesium oxide and magnesium hydroxide,

wherein the amount of the basic magnesium (C) included in the polyolefin resin composition is 0.05 to 0.5 parts by mass relative to 100 parts by mass of the resin (A), and

the basic magnesium (C) has an average particle diameter of 0.1 to 15 $\mu$m.

Advantageous Effects of Invention

According to the present invention, in a vehicle interior member obtained by further forming a cross-linked polyolefin resin foam, the generation of fogging caused by azodicarbonamide can be prevented, with the generation of huge cells being suppressed.

Description of Embodiments

The present invention is further described in detail with reference to embodiments as follows.

The polyolefin resin foam in the present invention (hereinafter referred to simply as "foam" in some cases) is obtained by cross-linking and foaming a polyolefin resin composition (hereinafter referred to simply as "resin composition" in some cases), the resin composition comprising a polyolefin resin-containing resin (A), azodicarbonamide (B), and a basic magnesium (C). Each of the components contained in the resin composition is described in detail as follows.

<Resin (A)>

Examples of the resin (A) include a resin comprising a polyolefin resin such as a polypropylene resin and a polyethylene resin.

(Polypropylene resin)

Examples of the polypropylene resin include a homopolypropylene which is a homopolymer of propylene, and a copolymer of propylene and an $\alpha$-olefin other than propylene. Examples of the copolymer of propylene and the $\alpha$-olefin other than propylene include a block copolymer, a random copolymer, and a random block copolymer, and a random copolymer (i.e. random polypropylene) is preferred.

Examples of the $\alpha$-olefin other than propylene include ethylene having 2 carbon atoms and an $\alpha$-olefin having about 4 to 10 carbon atoms such as 1-butene, 1-pentene, 1-hexene, 4-methyl-1-pentene, 1-heptene, and 1-octene.

Among these, ethylene is preferred from the viewpoint of formability and heat resistance. In the copolymer, the $\alpha$-olefins may be used singly or two or more may be used in combination.

The polypropylene resins may be used singly or two or more kinds may be used together.

Preferably, the random polypropylene is obtained by copolymerizing propylene in an amount of 50 mass% or more and less than 100 mass% and an $\alpha$-olefin other than propylene in an amount of 50 mass% or less. Relative to the total monomer components to constitute the copolymer, a content of propylene of 80 to 99.9 mass% and a content of an $\alpha$-olefin other than propylene of 0.1 to 20 mass% are more preferred, a content of propylene of 90 to 99.5 mass% and a content of an $\alpha$-olefin other than propylene of 0.5 to 10 mass% are still more preferred, and a content of propylene of 95 to 99 mass% and a content of an $\alpha$-olefin other than propylene of 1 to 5 mass% are further preferred.

(Polyethylene resin)

Examples of the polyethylene resin include a low-density polyethylene resin, a medium-density polyethylene resin, a high-density polyethylene resin, a linear low-density polyethylene resin. Among these, a linear low-density polyethylene resin (LLDPE) is preferred.

The linear low-density polyethylene resin is a polyethylene having a density of 0.910 g/cm$^3$ or more and less than 0.950 g/cm$^3$, preferably 0.910 g/cm$^3$ to 0.930 g/cm$^3$. A foam containing a linear low-density polyethylene resin with a low density tends to have improved processability in processing the resin composition into a foam and improved formability in forming the foam into a formed product. The density of the resin described above is measured in accordance with JIS K7112.

The linear low-density polyethylene is typically a copolymer of ethylene as main component (50 mass% or more relative to the total monomers, preferably 70 mass% or more, more preferably 90 mass% or more) and a small amount of $\alpha$-olefin. The $\alpha$-olefin has 3 to 12 carbon atoms, preferably 4 to 10 carbon atoms, and specific examples thereof include 1-butene, 1-pentene, 1-hexene, 4-methyl-1-pentene, 1-heptene, and 1-octene. In the copolymer, the $\alpha$-olefins may be used singly or two or more kinds may be used in combination.

The polyethylene resins may be used singly or two or more kinds may be used together.

The resin (A) contains a polyolefin resin. The resin (A) may consist of the polypropylene resin, the polyethylene resin, or a mixture thereof, or may further comprise a polyolefin resin component other than the resins described above.

Specific examples of such a resin component include an ethylene-propylene rubber (EPR), an ethylene-propylene-diene rubber (EPDM), an ethylene-vinyl acetate copolymer, an ethylene-acrylic acid copolymer, an ethylene-alkyl (meth)acrylate copolymer, and a modified copolymer of maleic anhydride copolymerized therewith.

The resin (A) may consist of a polyolefin resin alone, or may comprise a resin component other than the polyolefin resin within the range not impeding the object of the present invention.

The content of the polyolefin resin is typically 70 mass% or more, preferably 80 to 100 mass%, more preferably 90 to 100 mass%, relative to the total amount of the resin (A) contained in the resin composition.

The resin (A) contains the polypropylene rein preferably in an amount of 50 mass% or more, more preferably in an amount of 55 to 90 mass%, relative to the total amount of the resin (A) contained in the resin composition.

The polypropylene resin is preferably a random polypropylene, or may be a mixture of a homopolypropylene and a random polypropylene.

A foam containing the polypropylene resin as main component can have improved mechanical strength, heat resistance, and the like. The use of a polypropylene resin as main component results in the increased resin temperature inside an extruder as described below, so that stagnated materials tend to be generated inside the extruder due to resin deterioration. The stagnated materials mixed in the resin composition tend to cause huge cells. In order to prevent the generation of huge cells in the present invention, the component (C) for prevention of fogging has a small particle diameter and the amount of the component (C) blended is controlled in a specified range.

The resin (A) preferably further comprises the polyethylene resin in addition to the polypropylene resin as polyolefin resin. In that case, the content of the polyethylene resin is preferably 1 to 50 mass%, more preferably 10 to 45 mass%, relative to the total amount of the resin (A) contained in the resin composition.

The resin composition comprising the polyethylene resin in addition to the polypropylene resin tends to have improved processability and formability with enhanced mechanical strength, heat resistance, etc. The polyethylene resin is preferably a linear low-density polyethylene resin as described above.

<Azodicarbonamide (B)>

The resin composition of the present invention comprises azodicarbonamide (B). The azodicarbonamide (B) is a thermally decomposable foaming agent which is decomposed by heating to foam. For example, the azodicarbonamide (B) is decomposed in the step (3) described below to cause foaming of the resin composition.

The amount of azodicarbonamide (B) included in the resin composition is preferably 2 to 20 parts by mass, more preferably 3 to 12 parts by mass, relative to 100 parts by mass of the resin (A).

By setting the amount of the component (B) in the above range, appropriate foaming tends to be caused without rupture of the cells in a foam. Furthermore, a foam having a relatively high foaming ratio (i.e. low density) can be formed.

In the case of a resin composition comprising a polypropylene resin as main component, foaming of the resin composition (i.e. the decomposition of component (B)) is performed under a relatively high-temperature environment. As a result, the decomposition residue of the component (B) tends to be generated as sublimate. Even in such a circumstance, the use of a predetermined amount of a specified component (C) to be described below can prevent fogging caused by the sublimate of the component (B).

<Basic magnesium (C)>

The basic magnesium (C) for use in the present invention is at least one selected from the group consisting of magnesium oxide and magnesium hydroxide. The resin composition of the present invention may comprise any one of magnesium oxide and magnesium hydroxide, or may comprise both, as the component (C).

When azodicarbonamide (B) is decomposed by heating, a portion thereof forms a sublimate as described above, but in the present invention, inclusion of the component (C) prevents generation of the fogging caused by the sublimate. Moreover, the component (C) having a small particle diameter can prevent the generation of huge cells.

Specifically, the basic magnesium (C) has an average particle diameter of 0.1 to 15 $\mu$m. With the average particle diameter within the range, huge cells are hardly formed in the foam and the generation of fogging can be suppressed. From these viewpoints, the basic magnesium (C) has an average particle diameter of preferably 0.2 to 10 $\mu$m, more preferably 0.3 to 5 $\mu$m.

The average particle diameter of the basic magnesium (C) is a median diameter (D50) specifically measured by the method described in Examples.

The amount of the basic magnesium (C) included in the resin composition is 0.05 to 0.5 parts by mass relative to 100 parts by mass of the resin (A). With an amount of the component (C) included within the range, the generation of huge cells in a foam can be prevented and the generation of fogging can be sufficiently suppressed.

From these viewpoints, the amount of the basic magnesium (C) is preferably 0.05 to 0.4 parts by mass, more preferably 0.05 to 0.3 parts by mass, relative to 100 parts by mass of the resin (A).

The resin composition of the present invention may contain additives other than the components (A), (B), and (C). Examples of the preferred additives contained in the resin composition include a cross-linking aid and an antioxidant. Both of them may be contained or any one of them may be contained.

(Cross-linking aid)

A multi-functional monomer may be used as the cross-linking aid. Examples of the cross-linking aid include: a tri-functional (meth)acrylate compound such as trimethylolpropane trimethacrylate and trimethylolpropane triacrylate; a compound having three functional groups in a molecule such as trimellitic acid triallyl ester, 1,2,4-benzene tricarboxylic acid triallyl ester, and triallyl isocyanurate; a bi-functional (meth)acrylate compound such as 1,6-hexanediol dimethacrylate, 1,9-nonanediol dimethacrylate, 1,10-decanediol dimethacrylate, and neopentyl glycol dimethacrylate; a compound having two functional groups in a molecule such as divinylbenzene; diallyl phthalate, diallyl terephthalate, diallyl isophthalate, ethylvinylbenzene, lauryl methacrylate, and stearyl methacrylate. The cross-linking aid may be used singly or may be used in combination of two or more. Among them, tri-functional (meth)acrylate compound is more preferred.

The addition of a cross-linking aid to a resin composition allows the resin composition to be cross-linked with a small dose of ionizing radiation. As a result, the individual resin molecule is prevented from being cut or deteriorated by the exposure to ionizing radiation.

The content of a cross-linking aid is preferably 0.2 to 10 parts by mass, more preferably 0.5 to 7 parts by mass, still more preferably 1 to 5 parts by mass, relative to 100 parts by mass of the resin (A). With a content of 0.2 parts by mass or more, the resin composition is easily controlled to a desired cross-linking degree during foaming. With a content of 10 parts by mass or less, the cross-linking degree to be imparted to a resin composition can be easily controlled.

(Antioxidant)

Examples of the antioxidant include a phenol antioxidant, a sulfur antioxidant, a phosphorus antioxidant, an amine antioxidant. Among them a phenol antioxidant and a sulfur antioxidant are preferred, and use of a combination of a phenol antioxidant and a sulfur antioxidant is more preferred.

Examples of the phenol antioxidant include 2,6-di-tert-butyl-p-cresol, n-octadecyl-3-(3,5-di-tert-butyl-4-hydroxyphenyl)propionate, 2-tert-butyl-6-(3-tert-butyl-2-hydroxy-5-methylbenzyl)-4-methylphenylacrylate, tetrakis[methylene-3-(3,5-di-tert-butyl-4-hydroxyphenyl)propionate]methane. These phenol antioxidants may be used singly or may be used in combination of two or more.

Examples of the sulfur antioxidant include dilauryl thiodipropionate, dimyristyl thiodipropionate, distearyl thiodipropionate, pentaerythrityl tetrakis(3-lauryl thiopropionate). These sulfur antioxidants may be used singly or may be used in combination of two or more.

The content of the antioxidant is preferably 0.1 to 10 parts by mass, more preferably 0.2 to 5 parts by mass, relative to 100 parts by mass of resin (A).

On an as needed basis, the resin composition may contain an additive other than the above-described ones such as an agent for adjusting decomposition temperature such as zinc oxide, zinc stearate and urea, a flame retardant, a metal toxicity inhibitor, an antistatic agent, a stabilizer, a filler, and a pigment. The resin composition may further contain a foaming agent other than the component (B).

<Foam>

The foam of the present invention is a cross-linked and foamed product of the resin composition described above. The cross-linking degree of the foam is preferably 30 to 55%, more preferably 32 to 50%.

With a cross-linking degree of a foam in the above range, the mechanical strength, flexibility and formability can be improved in a balanced manner. The method for measuring the cross-linking degree of a foam is described in Examples as follows.

A foam in a sheet form is preferred. The thickness of a foam is preferably 0.5 to 10 mm, more preferably 0.8 to 8 mm, though not specifically limited.

The foam having such a thickness can be appropriately formed into a vehicle interior member.

The density (apparent density) of a foam is preferably 0.02 to 0.20 g/cm$^3$, more preferably 0.03 to 0.15 g/cm$^3$, for the improvement of flexibility and strength in a balanced manner, though not specifically limited.

When the foam has such a relatively low density by foaming with a high foaming ratio, huge cells generally tend to be generated due to foam rupture. In the present invention, however, since the component (C) for prevention of fogging has a small particle diameter and is used in the specified amount, huge cells are hardly generated.

<Method of manufacturing foam>

The method for manufacturing a foam in an embodiment of the present invention includes extruding a resin composition containing at least the components (A), (B) and (C) with an extruder, and cross-linking and foaming the resin composition extruded so as to obtain a cross-linked polyolefin resin foam. Specifically, the present manufacturing method preferably includes the following steps (1) to (3).

Step (1): A step of supplying the components (A), (B) and (C), and other additives blended on an as needed basis to an extruder so as to be melt-kneaded at a temperature lower than the decomposition temperature of azodicarbonamide as the component (B), and then extruding the resin composition in a predetermined shape such as in a sheet form from the extruder.

Step (2): A step of irradiating the resin composition obtained in the step (1) with ionizing radiation so as to cause cross-linking.

Step (3): A step of obtaining a foam by heating the resin composition cross-linked in the step (2) to a decomposition temperature of azodicarbonamide (B) or higher so as to cause foaming.

Examples of the extruder for use in the present manufacturing method include a mono-axial extruder and a bi-axial extruder. The resin temperature inside the extruder is preferably 130 to 195°C, more preferably 160 to 195°C.

Examples of the ionizing radiation for use in the step (2) include α ray, β ray, and γ ray, and electron beam. Among them, electron beam is preferred. The dose of irradiation of the ionizing radiation is preferably 0.1 to 10 Mrad, more preferably 0.2 to 5 Mrad, though not particularly limited as long as a desired cross-linking degree can be obtained. Because the dose of irradiation of the ionizing radiation is affected by the components (A), (B) and (C), the additives and the like, the dose of irradiation is typically controlled while measuring the cross-linking degree at the same time.

The temperature to cause foaming of a resin composition by heating in the step (3) is typically 200 to 290°C, preferably 220 to 280°C.

In the step (3), the foam may be stretched in one or both of the MD direction and the CD direction during or after foaming.

The manufacturing method described above is according to an embodiment of the present invention, and the foam may be manufactured by another manufacturing method.

<Formed product>

In the present invention, the foam alone or the foam laminated with a different material on an as needed basis is preferably formed into a formed product by a known method. Examples of the forming method include vacuum forming, compression molding and stamping. Among them, vacuum forming is preferred. The vacuum forming includes forming over a male mold and forming in a female mold. The vacuum forming in a female mold is preferred. Examples of the different material include a product in a sheet form such as a resin sheet, a thermoplastic elastomer sheet, and fabric.

The formed product may be used in various applications, and is used as a vehicle interior member such as a ceiling material, a door, and an instrument panel.

Examples

The present invention is further described in detail with reference to Examples as follows. The present invention is not limited to Examples, though.

The method for measuring each of the physical properties and the method for evaluating a foam are as follows.

(1) Average particle diameter

The average particle diameter of a basic magnesium is a median diameter (D50) measured by HELOS (H2731), under a dispersion pressure of 2.00 bar and a drawing pressure of 72.00 mbar.

(2) Cross-linking degree

A test piece of about 100 mg was sampled from a foam. The mass A (mg) of the test piece was accurately measured. Subsequently the test piece was immersed in 30 cm$^3$ of xylene at 120°C and left standing for 24 hours. The test piece was then filtered with a 200-mesh metal screen, and insoluble components on the metal mesh were sampled and vacuum-dried. The mass B (mg) of the insoluble components was accurately measured. From the measured value, the cross-linking degree (mass%) was calculated based on the following formula.

$$\text{Cross-linking degree (mass\%)}=100\times(\text{B/A})$$

(3) Density

The density (apparent density) of a foam was as measured in accordance with JIS K 7222.

(4) Thickness of foam

A dial gauge was used for the measurement.

(5) Evaluation on fogging

Fogging was evaluated by haze measurement after curing a foam at 100°C for 20 hours in a facility in accordance with ISO 6452. The haze was measured with NDH-300A manufactured by Nippon Denshoku Industries Co., Ltd. A product having a haze value of 15% or less was evaluated to be accepted.

(6) Huge cell

The obtained foam was visually inspected for the presence of huge cells. Light with an illuminance of 3,000 lx was transmitted through the foams with a sheet thickness of 4 mm obtained in Examples and Comparative Examples for the visual inspection. Foams having at most one huge cell per 3 m$^2$ were ranked as "A", and foams having more than one huge cell per 3 m$^2$ were ranked as "B".

Examples 1 to 8 and Comparative Examples 1 to 7

In each of the Examples and Comparative Examples, the components in parts by mass shown in Tables 1 and 2 were supplied to a mono-axial extruder, melt-kneaded at a resin temperature of 190°C, and extruded to obtain a resin composition in a sheet form with a thickness of 2.0 mm. Both surfaces of the resin composition in a sheet form were irradiated with electron beams at an acceleration voltage 800 kV with an irradiation dose of 1 Mrad to cross-link the resin composition. Then, the cross-linked resin composition was heated for foaming in an oven at 250°C for 5 minutes to produce a foamed sheet (foam) with a thickness of 4 mm. The evaluation results of the foam in each of the Examples and Comparative Examples are shown in Table 1 and 2.

[Table 1]

| | | Example | | | | | | | |
|---|---|---|---|---|---|---|---|---|---|
| | | 1 | 2 | 3 | 4 | 5 | 6 | 7 | 8 |
| Composition (part by mass) | Random PP | 70 | 70 | 70 | 70 | 90 | 60 | 60 | 90 |
| | LLDPE | 30 | 30 | 30 | 30 | 10 | 40 | 40 | 10 |
| | Azodicarbonamide | 8.5 | 8.5 | 8.5 | 8.5 | 8.5 | 8.5 | 8.5 | 8.5 |
| | Basic magnesium | 0.08 | 0.2 | 0.2 | 0.2 | 0.2 | 0.1 | 0.3 | 0.5 |
| | Cross-linking aid | 3 | 3 | 3 | 3 | 4 | 3 | 3 | 4 |
| | Antioxidant 1 | 0.3 | 0.3 | 0.3 | 0.3 | 0.3 | 0.1 | 1 | 0.3 |
| | Antioxidant 2 | 0.3 | 0.3 | 0.3 | 0.3 | 0.3 | 0.1 | 1 | 0.3 |
| Basic magnesium | Type | Oxide | Oxide | Oxide | Hydroxide | Oxide | Oxide | Oxide | Oxide |
| | Particle diameter (D50) ($\mu$m) | 4 | 4 | 0.5 | 0.8 | 4 | 5 | 5 | 4 |
| Evaluation result of foam | Cross-linking degree (mass%) | 45% | 45% | 45% | 45% | 42% | 50% | 51% | 43% |
| | Density (g/cm$^3$) | 0.056 | 0.056 | 0.056 | 0.056 | 0.056 | 0.056 | 0.056 | 0.056 |
| | Thickness (mm) | 4 | 4 | 4 | 4 | 4 | 4 | 4 | 4 |
| | Fogging (ISO) | 14% | 11% | 11% | 11% | 12% | 14% | 8% | 5% |
| | Huge cell (visual inspection) | A | A | A | A | A | A | A | A |

[Table 2]

| | | Comparative Example | | | | | | |
|---|---|---|---|---|---|---|---|---|
| | | 1 | 2 | 3 | 4 | 5 | 6 | 7 |
| Composition (part by mass) | Random PP | 70 | 70 | 70 | 70 | 60 | 90 | 90 |
| | LLDPE | 30 | 30 | 30 | 30 | 40 | 10 | 10 |
| | Azodicarbonamide | 8.5 | 8.5 | 8.5 | 8.5 | 1 | 8.5 | 8.5 |
| | Basic magnesium | 0.02 | 0.6 | 0.2 | - | 0.04 | 0.2 | 0.02 |
| | Cross-linking aid | 3 | 3 | 3 | 3 | 3 | 4 | 4 |
| | Antioxidant 1 | 0.3 | 0.3 | 0.3 | 0.3 | 3 | 0.3 | 0.3 |
| | Antioxidant 2 | 0.3 | 0.3 | 0.3 | 0.3 | 3 | 0.3 | 0.3 |
| Basic magnesium | Type | Oxide | Oxide | Oxide | - | Oxide | Oxide | Hydroxide |
| | Particle diameter (D50) ($\mu$m) | 4 | 4 | 17 | - | 4 | 16 | 2 |
| Evaluation result of foam | Cross-linking degree (mass%) | 45% | 45% | 45% | 45% | 50% | 42% | 44% |
| | Density (g/cm$^3$) | 0.056 | 0.056 | 0.056 | 0.056 | 0.056 | 0.056 | 0.056 |
| | Thickness (mm) | 4 | 4 | 4 | 4 | 4 | 4 | 4 |
| | Fogging (ISO) | 19% | 9% | 17% | 25% | 23% | 21% | 23% |
| | Huge cell (visual inspection) | A | B | B | A | A | B | A |

*In Tables 1 and 2, "oxide" indicates that the basic magnesium is magnesium oxide, and "hydroxide" indicates that the basic magnesium is magnesium hydroxide.

The resins and the additives in each Tables 1 and 2 are as follows.

Random PP: ethylene-propylene random copolymer, product name: EG7F, manufactured by Japan Polypropylene Corporation, MFR=1.3 g/10 min, ethylene content: 3 mass%

LLDPE: linear low-density polyethylene, product name: 5220G, manufactured by The Dow Chemical Company, Japan, density: 0.915 g/cm$^3$.

Cross-linking aid: trimethylol propane trimethacrylate

Antioxidant 1: 2,6-di-tert-butyl-p-cresol

Antioxidant 2: dilauryl thiodipropionate

In Examples 1 to 8, due to a specified amount of basic magnesium with a small particle diameter blended, the generation of fogging was prevented and the generation of huge cells was suppressed, so that foams suitable for use as vehicle interior members were obtained.

In contrast, in Comparative Examples 1, 4, 5 and 7, due to zero or insufficient amount of the basic magnesium blended, fogging was not sufficiently suppressed. On the other hand, in Comparative Example 2, although fogging was suppressed, the appearance was poor due to the presence of huge cells, resulting from an excessive amount of the basic magnesium blended. Furthermore, in Comparative Examples 3 and 6, due to the large particle diameter of the basic magnesium, fogging was not sufficiently suppressed even though the amount blended was appropriate, and the appearance was poor due to the presence of huge cells.

**Claims**

1.    A vehicle interior member obtained by further forming a cross-linked polyolefin resin foam,
the cross-linked polyolefin resin foam obtained by cross-linking and foaming a polyolefin resin composition,
the composition comprising a polyolefin resin-containing resin (A), azodicarbonamide (B), and at least one basic magnesium (C) selected from the group consisting of magnesium oxide and magnesium hydroxide,
wherein the amount of the basic magnesium (C) included in the polyolefin resin composition is 0.05 to 0.5 parts by mass relative to 100 parts by mass of the resin (A), and
the basic magnesium (C) has an average particle diameter of 0.1 to 15 $\mu$m.

2. The vehicle interior member according to claim 1, wherein the amount of the azodicarbonamide (B) included in the polyolefin resin composition is 3 to 12 parts by mass relative to 100 parts by mass of the resin (A).

3. The vehicle interior member according to claim 1 or 2, wherein the resin (A) comprises 50 mass% or more of a polypropylene resin as the polyolefin resin.

4. The vehicle interior member according to claim 3, wherein the resin (A) further comprises 1 to 50 mass% of a polyethylene resin as the polyolefin resin.

5. The vehicle interior member according to any one of claims 1 to 4, wherein the foam has a density of 0.02 to 0.20 g/cm$^3$.

6. A method of manufacturing a vehicle interior member comprising:

extruding a polyolefin resin composition comprising a polyolefin resin-containing resin (A), azodicarbonamide (B), and at least one basic magnesium (C) selected from the group consisting of magnesium oxide and magnesium hydroxide with an extruder;
cross-linking and foaming the extruded polyolefin resin composition so as to obtain a cross-linked polyolefin resin foam, and
forming the cross-linked polyolefin resin foam to the vehicle interior member,

wherein the amount of the basic magnesium (C) included in the polyolefin resin composition is 0.05 to 0.5 parts by mass relative to 100 parts by mass of the resin (A), and
the basic magnesium (C) has an average particle diameter of 0.1 to 15 $\mu$m.

7. Use of a cross-linked polyolefin resin foam in a vehicle interior member, comprising forming the cross-linked polyolefin resin foam to the vehicle interior member,
the cross-linked polyolefin resin foam obtained by cross-linking and foaming a polyolefin resin composition,
the composition comprising a polyolefin resin-containing resin (A), azodicarbonamide (B), and at least one basic magnesium (C) selected from the group consisting of magnesium oxide and magnesium hydroxide,
wherein the amount of the basic magnesium (C) included in the polyolefin resin composition is 0.05 to 0.5 parts by mass relative to 100 parts by mass of the resin (A), and
the basic magnesium (C) has an average particle diameter of 0.1 to 15 $\mu$m.

**Patentansprüche**

1. Trägerstoffinnenelement, das durch weiteres Ausbilden eines quervernetzten Polyolefinharzschaumstoffes erhalten wird,
wobei der quervernetzte Polyolefinharzschaumstoff durch Quervernetzen und Schäumen einer Polyolefinharzzusammensetzung erhalten wird,
wobei die Zusammensetzung ein Polyolefinharz enthaltendes Harz (A), Azodicarbonamid (B) und wenigstens ein basisches Magnesium (C) umfasst, das aus der Gruppe ausgewählt ist, die aus Magnesiumoxid und Magnesiumhydroxid besteht,
wobei die Menge des basischen Magnesiums (C), die in der Polyolefinharzzusammensetzung beinhaltet ist, 0,05 bis 0,5 Massenteile relativ zu 100 Massenteilen des Harzes (A) beträgt und
wobei das basische Magnesium (C) einen durchschnittlichen Partikeldurchmesser von 0,1 bis 15 $\mu$m aufweist.

2. Trägerstoffinnenelement nach Anspruch 1, wobei die Menge des Azodicarbonamids (B), die in der Polyolefinharzzusammensetzung beinhaltet ist, 3 bis 12 Massenteile relativ zu 100 Massenteilen des Harzes (A) beträgt.

3. Trägerstoffinnenelement nach Anspruch 1 oder 2, wobei das Harz (A) 50 Massen-% oder mehr eines Polypropylenharzes als das Polyolefinharz umfasst.

**4.** Trägerstoffinnenelement nach Anspruch 3, wobei das Harz (A) ferner 1 bis 50 Massen-% eines Polyethylenharzes als das Polyolefinharz umfasst.

**5.** Trägerstoffinnenelement nach einem der Ansprüche 1 bis 4, wobei der Schaumstoff eine Dichte von 0,02 bis 0,20 g/cm$^3$ aufweist.

**6.** Verfahren zum Herstellen eines Trägerstoffinnenelements, umfassend:

Extrudieren einer Polyolefinharzzusammensetzung, die ein Polyolefinharz enthaltendes Harz (A), Azodicarbonamid (B) und wenigstens ein basisches Magnesium (C) umfasst, das aus der Gruppe ausgewählt ist, die aus Magnesiumoxid und Magnesiumhydroxid besteht, mit einem Extruder;
Quervernetzen und Schäumen der extrudierten Polyolefinharzzusammensetzung, um einen quervernetzten Polyolefinharzschaumstoff zu erhalten, und
Ausbilden des quervernetzten Polyolefinharzschaumstoffes zu dem Trägerstoffinnenelement,
wobei die Menge des basischen Magnesiums (C), die in der Polyolefinharzzusammensetzung beinhaltet ist, 0,05 bis 0,5 Massenteile relativ zu 100 Massenteilen des Harzes (A) beträgt und
wobei das basische Magnesium (C) einen durchschnittlichen Partikeldurchmesser von 0,1 bis 15 $\mu$m aufweist.

**7.** Verwendung eines quervernetzten Polyolefinharzschaumstoffes in einem Trägerstoffinnenelement, umfassend:
Ausbilden des quervernetzten Polyolefinharzschaumstoffes zu dem Trägerstoffinnenelement,
den durch Quervernetzen und Schäumen einer Polyolefinharzzusammensetzung erhaltenen quervernetzten Polyolefinharzschaumstoff,
die Zusammensetzung, die ein Polyolefinharz enthaltendes Harz (A), Azodicarbonamid (B) und wenigstens ein basisches Magnesium (C) umfasst, das aus der Gruppe ausgewählt ist, die aus Magnesiumoxid und Magnesiumhydroxid besteht,
wobei die Menge des basischen Magnesiums (C), die in der Polyolefinharzzusammensetzung beinhaltet ist, 0,05 bis 0,5 Massenteile relativ zu 100 Massenteilen des Harzes (A) beträgt und
wobei das basische Magnesium (C) einen durchschnittlichen Partikeldurchmesser von 0,1 bis 15 $\mu$m aufweist.

**Revendications**

**1.** Élément intérieur de véhicule obtenu en formant en outre une mousse de résine polyoléfinique réticulée,
la mousse de résine polyoléfinique réticulée étant obtenue par réticulation et moussage d'une composition de résine polyoléfinique,
la composition comprenant une résine contenant une résine polyoléfinique (A), de l'azodicarbonamide (B) et au moins un magnésium basique (C) choisi dans le groupe constitué par l'oxyde de magnésium et l'hydroxyde de magnésium,
la quantité de magnésium basique (C) incluse dans la composition de résine polyoléfinique étant de 0,05 à 0,5 partie en masse par rapport à 100 parties en masse de la résine (A), et
le magnésium basique (C) ayant un diamètre de particule moyen de 0,1 à 15 $\mu$m.

**2.** Élément intérieur de véhicule selon la revendication 1, la quantité d'azodicarbonamide (B) incluse dans la composition de résine polyoléfinique étant de 3 à 12 parties en masse par rapport à 100 parties en masse de la résine (A).

**3.** Élément intérieur de véhicule selon la revendication 1 ou 2, la résine (A) comprenant 50 % en masse ou plus d'une résine de polypropylène en tant que résine polyoléfinique.

**4.** Élément intérieur de véhicule selon la revendication 3, la résine (A) comprenant en outre 1 à 50 % en masse d'une résine de polyéthylène en tant que résine polyoléfinique.

**5.** Élément intérieur de véhicule selon l'une quelconque des revendications 1 à 4, la mousse ayant une densité de 0,02 à 0,20 g/cm$^3$.

**6.** Procédé de fabrication d'un élément intérieur de véhicule comprenant :

l'extrusion d'une composition de résine polyoléfinique comprenant une résine contenant une résine polyoléfinique (A), de l'azodicarbonamide (B) et au moins un magnésium basique (C) choisi dans le groupe constitué par l'oxyde de magnésium et l'hydroxyde de magnésium avec une extrudeuse ;
la réticulation et le moussage de la composition de résine polyoléfinique extrudée de manière à obtenir une mousse de résine polyoléfinique réticulée, et
la formation de la mousse de résine polyoléfinique réticulée vers l'élément intérieur du véhicule,
la quantité de magnésium basique (C) comprise dans la composition de résine polyoléfinique étant de 0,05 à 0,5 partie en masse par rapport à 100 parties en masse de la résine (A), et
le magnésium basique (C) ayant un diamètre de particule moyen de 0,1 à 15 μm.

7. Utilisation d'une mousse de résine polyoléfinique réticulée dans un élément intérieur de véhicule, comprenant la formation de la mousse de résine polyoléfinique réticulée vers l'élément intérieur du véhicule,
la mousse de résine polyoléfinique réticulée obtenue par réticulation et moussage d'une polyoléfine une composition de résine,
la composition comprenant une résine contenant une résine polyoléfinique (A), de l'azodicarbonamide (B) et au moins un magnésium basique (C) choisi dans le groupe constitué par l'oxyde de magnésium et l'hydroxyde de magnésium,
la quantité de magnésium basique (C) incluse dans la composition de résine polyoléfinique étant de 0,05 à 0,5 partie en masse par rapport à 100 parties en masse de la résine (A), et
le magnésium basique (C) ayant un diamètre de particule moyen de 0,1 à 15 μm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3532791 B
- EP 0011748 A1
- EP 2000500 A1
- JP 2013245251 A
- JP 2010280838 A